(19) Europäisches Patentamt
European Patent Office
Office européen des brevets

(11) **EP 4 105 824 B1**

(12) **EUROPÄISCHE PATENTSCHRIFT**

(45) Veröffentlichungstag und Bekanntmachung des Hinweises auf die Patenterteilung:
**24.07.2024 Patentblatt 2024/30**

(21) Anmeldenummer: **21179196.7**

(22) Anmeldetag: **14.06.2021**

(51) Internationale Patentklassifikation (IPC):
**G06V 10/147** *(2022.01)* **G06V 10/20** *(2022.01)*
**G06V 20/80** *(2022.01)*

(52) Gemeinsame Patentklassifikation (CPC):
**G06V 20/80; G06V 10/147; G06V 10/22**

(54) **VERFAHREN ZUR BERÜHRUNGSLOSEN UND ZERSTÖRUNGSFREIEN ECHTHEITS-PRÜFUNG EINER KOMPONENTE**

METHOD FOR CONTACTLESS AND NON-DESTRUCTIVE VERIFICATION OF THE VALIDITY OF A COMPONENT

PROCÉDÉ D'ESSAI SANS CONTACT ET NON DESTRUCTIF D'UN COMPOSANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**21.12.2022 Patentblatt 2022/51**

(73) Patentinhaber: **Fraunhofer-Gesellschaft zur Förderung
der angewandten Forschung e.V.
80686 München (DE)**

(72) Erfinder:
• **Bendjus, Beatrice
01067 Dresden (DE)**
• **Münch, Stefan
01109 Dresden (DE)**
• **Chen, Lili
01067 Dresden (DE)**
• **Cikalova, Ulana
01471 Radeburg (DE)**

(74) Vertreter: **Rösler, Uwe
Rösler Patentanwaltskanzlei
Landsberger Strasse 480a
81241 München (DE)**

(56) Entgegenhaltungen:
**US-B2- 8 781 153**

• **PRADANA ADITYA BUDI ET AL: "A Portable Surface Roughness Measurement System Using Laser Speckle Imaging Based on GLCM", 2019 6TH INTERNATIONAL CONFERENCE ON INSTRUMENTATION, CONTROL, AND AUTOMATION (ICA), IEEE, 31 July 2019 (2019-07-31), pages 100 - 105, XP033666091, DOI: 10.1109/ICA.2019.8916729**
• **B. BENDJUS ET AL: "A Portable Surface Roughness Measurement System Using Laser Speckle Imaging Based on GLCM", A PORTABLE SURFACE ROUGHNESS MEASUREMENT SYSTEM USING LASER SPECKLE IMAGING BASED ON GLCM, 9 December 2015 (2015-12-09), pages 245, XP055566272, ISBN: 978-3-9813484-9-1, DOI: 10.5162/12dss2015/P7.8**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

**Technisches Gebiet**

Die Erfindung bezieht sich auf ein Verfahren zur berührungslosen und zerstörungsfreien Echtheits-Prüfung einer über eine herstellungsbedingte technische Oberflächentextur verfügenden Komponente mittels einer Laserlicht induzierten Speckle-Muster-Analyse.

Hersteller von mit elektronischen Komponenten bestückten Baugruppen sowie deren Endkunden sind zunehmend dem Problem gefälschter oder manipulierter elektronischer Bauteilen ausgesetzt. Die steigende Nachfrage nach vergleichsweise teuren Komponenten mit integrierten Schaltungen bei zeitgleichem Mangel an Produktionskapazitäten, siehe den weltweit vorherrschenden Chipmangel, rückt den Markt zunehmend in das Interesse von Betrügern. Beispielsweise werden Chips niedriger Qualitätsstufe eingekauft, neu beschriftet und als Chips hoher Qualitätsstufe weiterverkauft. Gelangen diese Fälschungen in die Produktion, hat dies Auswirkungen auf die Funktionsfähigkeit der ganzen Baugruppe bis hin zum Funktionsverlust. Da ein Austausch verarbeiteter Bauelemente auf vorhandenen Baugruppen meist mehr kostet als eine Neuproduktion, wird oft die komplette Charge zum Ausschuss erklärt. Das gleiche Problem besteht im Bereich von elektronischen Flash-Speichern.

**Stand der Technik**

Insbesondere im Bereich der Originalitätsprüfung von Bauelementen gibt es ein weites Spektrum an möglichen Überprüfungsmöglichkeiten. Diese reichen von der Prüfung der Verpackung, über die Überprüfung von Oberflächenmarkierungen, der Kontrolle der Abmessungen bis hin zu Röntgeninspektionen, Materialanalysen und elektrischen Tests, siehe Goertzel KM (2013), Integrated circuit security threats and hardware assurance countermeasures. CrossTalk 26(6):33-38 .

Es ist bekannt, dass die Prüfaufwände für die Prüfung der Bauteilverpackung, der Oberflächenmarkierungen und der Abmessungen vergleichsweise gering sind. Hierzu dienen optische Aufnahmen, wodurch die Tests echtzeitfähig sind und somit in automatisierten Bearbeitungsprozessen, d.h. inlinefähig, umsetzbar sind. Nachteilhaft bei derartigen Prüfverfahren ist die einfache Fälschbarkeit, sodass sie eine nur geringe Aussagekraft bieten.

Hingegen ermöglichen Röntgeninspektionen den Blick in das Bauteilinnere hinein und sind dadurch sehr gut geeignet, unerwünschte bzw. manipulierte Bereiche im Layout zu erfassen. Eine Aussage über eine bestimmte Qualitätsstufe eines vorliegenden Bauteils kann jedoch nicht getroffen werden, weshalb die mit der Röntgeninspektion erzielbare Sicherheit als nur mittelmäßig eingeschätzt wird. Während die Aufnahmetechniken mittels Röntgeninspektionen zwar inlinefähig umsetzbar sind, ist ihre Auswertung aufwendig und nicht in Echtzeit ausführbar, weshalb auch die gesamte Inlinefähigkeit als aufwendig zu bewerten ist. Zudem sind die Anschaffungskosten für derartige Prüfsysteme sehr hoch.

Materialanalysetechniken erfordern ebenfalls hohe Anschaffungskosten und stellen einen hohen Aufwand in der Prüfung dar, vermögen jedoch nicht Originalkomponenten von unbeschrifteten Bauelementen schlechterer Qualität belastbar zu unterscheiden. Zudem ist die Inlinefähigkeit dieser Verfahren nicht gegeben, da die Materialprüfung ein zerstörendes Verfahren darstellt und lediglich stichprobenartig Anwendung finden kann.

Die sicherste Prüfmethode zum Ausschluss manipulierter oder gefälschter Bauelemente stellt die elektrische Prüfung dar, beginnend von Messungen elektrischer Basisgrößen eines Bauelementes, über das Auslesen von ID's bis hin zur Prüfung mittels Testprogrammen. Jedoch ist die Inlinefähigkeit auch in diesen Fällen nur schwer bis nicht herstellbar, da jedes Element kontaktiert und durchgemessen werden muss. Insbesondere für Speicherkomponenten gilt nach heutiger Kenntnis, dass die Echtheits- und Qualitätsüberprüfung lediglich durch elektrisches Kontaktieren und softwareseitiges Prüfen der Komponenten möglich ist.

Die Nutzung sogenannter Speckle-Muster als Authentifizierungskriterium ermöglicht durch einen verhältnismäßig einfachen optischen Messaufbau und schnelle Auswertalgorithmen einen geringen Aufwand in der Prüfung und ist vergleichbar zu anderen optischen Methoden zur Prüfung von Verpackung, Oberflächenmarkierungen und Abmessungen. Die Erfassung und Auswertung von Speckle-Muster bieten jedoch eine deutlich höhere Sicherheit zur Feststellung und Unterscheidung von Fälschungen und Originalteilen, da ähnlich wie bei der Materialanalyse, auf Herstellungsprozess-seitige Merkmale an oder auf den Bauelementen zurückgegriffen wird. Zusätzlich ermöglicht eine Speckle-Muster-Erfassung die Prüfung von Veränderungen an der Oberflächenbeschaffenheit aufgrund der Detektionsmöglichkeit von Veränderungen von Oberflächenmarkierungen und verfügt darüberhinaus über eine sehr gute Inlinefähigkeit, da Aussagen zur Echtheit eines Bauelementes oder einer Komponente in Millisekunden getroffen werden können.

Die Druckschrift GB 2 411 954 A beschreibt ein Laserbasiertes Speckle-Muster Analyseverfahren zur Prüfung der Originalität von Bauteilen oder Komponenten. Hierzu wird ein linienförmiger Laserstrahl, d.h. kohärentes Licht, auf die Oberfläche einer zu überprüfenden Komponente gerichtet, auf der sich ein linienhaftes Speckle-Muster ausbildet, das von einer Detektoranordnung jeweils unter verschiedenen Streulichtwinkeln erfasst wird. Im Rahmen einer Messauswertung erfolgt die Anfertigung eines der zu überprüfenden Komponente zuordenbaren, digitalen Fingerprints auf der Grundlage einer Fouriertransformation detektierter Amplitudenwerte. Dieser so erhaltene Fingerprint wird mit bevorrateten Referenzdaten verglichen, um einen Grad an Übereinstimmung zu ermitteln, der der Authentizitätsprüfung zugrunde gelegt wird.

Die Druckschrift "A Portable Surface Roughness Measurement System Using Laser Speckle Imaging Based on GLCM", by PRADANA ADITYA BUDI ET AL: offenbart eine Vorrichtung sowie ein Verfahren zur Bestimmung bzw. Messung der Oberflächenrauigkeit von Metallplatten mit Hilfe des Laser-Speckle-Verfahrens, bei dem zur Charakterisierung eines sensorisch erfassten Speckle-Musters dessen Grauwertübergangsmatrix ermittelt und zugrunde gelegt wird, d.h. der Kontrastwert C und/oder die Homogenität H. Diese Werte werden letztlich mit Vergleichswerten kalibriert, um eine Aussage über die Oberflächenrauigkeit einer sensorisch gemessenen Metallplatte treffen zu können.

**Darstellung der Erfindung**

Ausgehend von dem vorbezeichneten Stand der Technik gilt es ein Verfahren zur berührungslosen und zerstörungsfreien Echtheits-Prüfung einer über eine herstellungsbedingte technische Oberflächentextur verfügenden Komponente mittels einer Laserlicht induzierten Speckle-Muster-Analyse, derart weiterzubilden, so dass das Verfahren über eine verbesserte Inlinefähigkeit sowie eine höhere Robustheit bezüglich eines gesicherten Authentizitätsnachweises verfügen soll, bei gleichzeitiger Reduzierung der hierfür zu erforderlichen zeitlichen, energetischen und finanziellen Aufwendungen.

Die Lösung der der Erfindung zugrundeliegenden Aufgabe ist im Anspruch 1 angegeben. Den Erfindungsgedanken vorteilhaft weiterbildende Merkmale sind Gegenstand der Unteransprüche sowie der Beschreibung unter Bezugnahme auf die Ausführungsbeispiele zu entnehmen.

Lösungsgemäß zeichnet sich das Verfahren zur berührungslosen und zerstörungsfreien Echtheits-Prüfung einer über eine herstellungsbedingte technische Oberflächentextur verfügenden Komponente mittels einer Laserlicht induzierten Specklemuster-Analyse dadurch aus, dass wenigstens ein Bereich einer die Oberflächentextur enthaltenen Oberfläche der Komponente mit Laserlicht unter Ausbildung eines durch die Oberflächentextur beeinflussten, flächigen Specklemusters beaufschlagt wird, das ortsaufgelöst detektiert und in einen 2-dimensionalen, digitalen Speckle-Muster-Signaldatensatz, kurz SMS, umgewandelt wird.

Vorzugsweise wird die zu überprüfende Komponente zumindest während der Laserlichtbeaufschlagung sowie der ortsaufgelösten Detektion des sich ausbildenden flächigen Specklemusters relativ zu einer das Laserlicht emittierenden Lichtquelle sowie einer das flächige Specklemuster detektierenden Einheit ruhend, d.h. stationär gelagert. Eine hierzu äquivalente Messsituation ist denkbar, bei der die zu überprüfende Komponente relativ zur Messanordnung aus Lichtquelle und -detektor unter der Maßgabe bewegt wird, dass der Detektor mit einer ausreichend kurzen Verschlußzeit den 2-dimensionalen, digitalen Speckle-Muster-Signaldatensatz zu erzeugen in der Lage ist, so dass von einer quasistatischen Aufnahmesituation ausgegangen werden kann, d.h. die Verschluß- bzw. Detektionszeit ist hinreichend kurz im Vergleich zur gewählten Relativgeschwindigkeit.

Der SMS, der typischerweise in Form einer Bilddatei vorliegt und das Ergebnis eines Auslesevorgangs aus einem über eine Vielzahl an Bildpunkten (Pixel) verfügenden, Bildsensor, typischerweise einer CCD- oder CMOS- Kamera, darstellt, wird im Weiteren wenigstens einer Bildsignalverarbeitungsroutine unterzogen, bei der wenigstens ein dem SMS zuordenbarer Parameter berechnet wird, der jeweils mit einem Soll-Parameter zur Ermittlung einer Abweichung verglichen wird, die einem Vergleichskriterium zugrunde gelegt wird, das der Echtheits-Prüfung dient.

Als besonders geeignet haben sich die jene drei Bildsignalverarbeitungsroutinen gezeigt, die a) ein Grauwertübergangsmatrix, b) ein Histogramm und/oder c) ein Bildintensitätsstatistik jeweils zum SMS erstellt.

Im Fall a), d.h. bei Anwendung bzw. Berechnung der Grauwertübergangsmatrix, wird als geeigneter Parameter ein Kontrastwert C der folgenden Form

$$C = \sum_{m,n} (m-n)^2 G_{mn}$$

ermittelt.

Alternativ oder in Kombination wird im Fall a) als der oder ein weiterer Parameter die Homogenität H der folgenden Form ermittelt:

$$H = \sum_{m,n} \frac{1}{1+(m-n)^2} G_{mn},$$

wobei für m, n und $G_{mn}$ folgendes gilt:

$m$, $n$ : Zeilen- und Spaltennummer der Grauwertübergangsmatrix,

$G_{mn}$ : Wert in der Grauwertübergangsmatrix

Die Grauwertübergangsmatrix (GLCM: Graylevel co-occurrence matrix) ist eine aus einem Graustufenbild abgeleitete Matrix, die die räumliche Beziehung von Pixeln des Bildsensors im Detektor berücksichtigt. Sie kann ermittelt werden, indem berechnet wird, wie oft Pixelpaare mit bestimmten Werten und in einer bestimmten räumlichen Beziehung in einem Bild vorkommen und dient als ein statistisches Werkzeug zur Untersuchung von Texturen. Die detaillierten Regeln zur Erstellung des GLCM sind der Druckschrift von Haralick RM, Shanmugam K, Dinstein I, (1973), Textural Features for Image Classification, IEEE Trans. Syst., Man, Cybern, Doi:10.1 109/TSMC.1973.4309314, zu entnehmen. Die zwei aus der Grauwertübergangsmatrix berechneten Parameter C und H erfüllen die Anforderungen zur Charakterisierung der Speckle-Muster in einem besonderen Maße.

Im Fall b) wird als geeigneter Parameter ein Entropiewert E der folgenden Form ermittelt:

$$E = -\sum_{I=0}^{255}[rel(I) * log_2(rel(I))]$$

mit *rel(I)* normalisierte Histogrammzahlen eines bestimmten Grauwerts *I*, der als ganze Zahl im Bereich von 0 bis 255 definiert ist.

Hierzu dient als Grundlage die Ermittlung des Histogramms von dem detektierten Speckle-Musters, zu dem die Entropie nach vorstehender Gleichung ermittelt wird und ein statistisches Maß für die Zufälligkeit darstellt, mit der die Textur des eingegebenen Speckle-Bildes charakterisierbar ist.

Im Fall c), bei dem das Speckle-Muster unter Verwendung der Intensitätsstatistik erster Ordnung ausgewertet wird, wird als geeigneter Parameter eine Abweichung D der folgenden Form ermittelt:

$$D = \sqrt{\frac{\sum_x \sum_y (I_{xy} - M)^2}{N - 1}}$$

mit $M = \frac{\sum_x \sum_y I_{xy}}{N}$ : durchschnittlicher Grauwert aller Signaldaten innerhalb des SMS,

$I_{xy}$ : Grauwert von Signaldaten (*x*, *y*) im SMS und
*N*: Gesamtzahl der Signaldaten im SMS.

Die Abweichung *D* ist ein geeigneter Parameter, um den Unterschied der von verschiedenen Oberflächenstrukturen erzeugten Specklemuster zu charakterisieren.

Durch die lösungsgemäße Verwendung einer oder mehrerer der vorstehenden vier Parametern, d.h. C, H, E, D, kann eine quantitative Analyse der Speckle-Muster erfolgen, die die entsprechenden Strukturen der Bauteiloberflächen charakterisieren.

Eine bevorzugte Vorgehensweise zur Echtheits-Prüfung einer Komponente, bspw. eines elektronischen Bauteils, die zumindest bereichsweise über einen keramischen, metallischen, polymeren, glasartigen, amorphen Oberflächenbereich oder einen hybrid, aus den vorstehenden Oberflächenmaterialien zusammengesetzten Oberflächenbereich verfügt, in dem eine fertigungsbedingte eingeprägte Oberflächentextur enthalten ist, sieht vor, dass ein von einer Laserquelle emittierter Laserstrahl auf den Oberflächenbereich des zu untersuchenden Bauteils gerichtet wird. Mit einem zur ortsaufgelösten Erfassung ausgebildeten Detektor, bspw. CMOS- oder CCD-Kamera, wird das am bestrahlten Oberflächenbereich reflektierte und gestreute Laserlicht in Form eines Speckle-Musters statisch erfasst.

Die mit dem optischen Detektor erfassten Bildpixelsignale werden durch den Signalauslesevorgang in einen Speckle-Muster-Signaldatensatz SMS umgewandelt und einer elektronischen Auswerteeinheit zugeführt sowie mit in einem elektronischen Speicher abgespeicherten, durch eine Kalibrierung bzw. Referenzmessung an einer Referenz-Komponente erhaltenen Referenz-Speckle-Muster-Signaldatensatz, kurz RSMS verglichen.

Bei dem gespeicherten, durch eine Kalibrierung an einer Referenz-Komponente erhaltenen RSMS handelt es sich um ein SMS, der unter den gleichen Messbedingungen ermittelt worden ist, denen auch die zu überprüfenden Bauteile unterzogen werden, d.h. es gilt die gleichen Beleuchtungsbedingen und gleichen Einstellungen an dem zur ortsaufgelösten Erfassung ausgebildeten Detektor einzuhalten. Die Referenz-Komponente stellt ein Originalbauteil dar, deren herstellungsbedingte, technische Oberflächentextur mittels eines authentifizierten bzw. originalen Herstellungsverfahrens erzeugt wurde.

Der ermittelte RSMS wird zur Ermittlung der sogenannten Soll-Parameter gleichsam wenigstens einer der vorstehend beschriebenen Bildsignalverarbeitungsroutinen zur Erstellung der Grauwertübergangsmatrix, des Histogramms und/oder der Bildintensitätsstatistik unterzogen. Unter Anwendung der vorstehenden Gleichungen zur Ermittlung der Parameter C,H,E,D werden unter Zugrundelegung der RSMS die Soll-Parameter, d.h. Soll-Kontrast C, Soll-Homogenität H, Soll-Entropie E und Soll-Abweichung D ermittelt.

Durch Vergleich der zu der zu überprüfenden Komponente ermittelten Parameter C,H,E,D mit den jeweils korrespondierenden Soll-Parametern wird eine etwaige Abweichung zwischen dem Original und dem vorliegenden Bauteil quantifiziert und der Echtheit-Prüfung zugrunde gelegt.

**Kurze Beschreibung der Erfindung**

Die Erfindung wird nachstehend ohne Beschränkung des allgemeinen Erfindungsgedankens anhand von Ausführungsbeispielen unter Bezugnahme auf die Zeichnung exemplarisch beschrieben. Es zeigen:

Fig. 1 schematische Darstellung eines Laser-Speckle-Photometrie (LSP)-Aufbaus während einer Messung an der Oberfläche einer überprüfenden Komponente und

Fig. 2 schematische Darstellung einer Datenverarbeitung,

**Wege zur Ausführung der Erfindung, gewerbliche Verwendbarkeit**

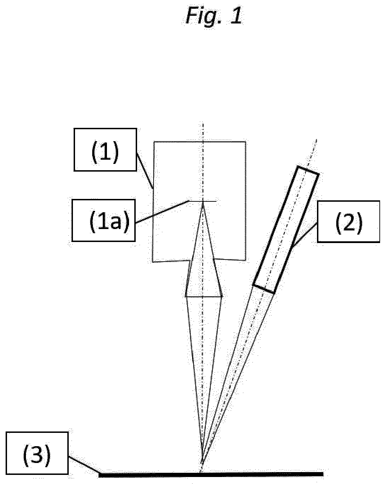

Figur 1 zeigt den Aufbau einer Anordnung zur Durchführung einer Laser-Speckle-Photometrie. Die zu untersuchende Komponente 3 weist eine optisch raue Oberfläche auf, die eine ihren Herstellungsprozess charakterisierende Oberflächentextur beinhaltet. Diese Oberflächentextur wird mittels einer Laserdiode als Strahlungsquelle 2 illuminiert. Eine CCD-Kamera dient als Detektor 1 mit der Detektorkomponente 1a zur ortsaufgelösten Detektion des Speckle-Musters an der Messposition in einem bestrahlten Oberflächenbereich der Oberflächentextur.

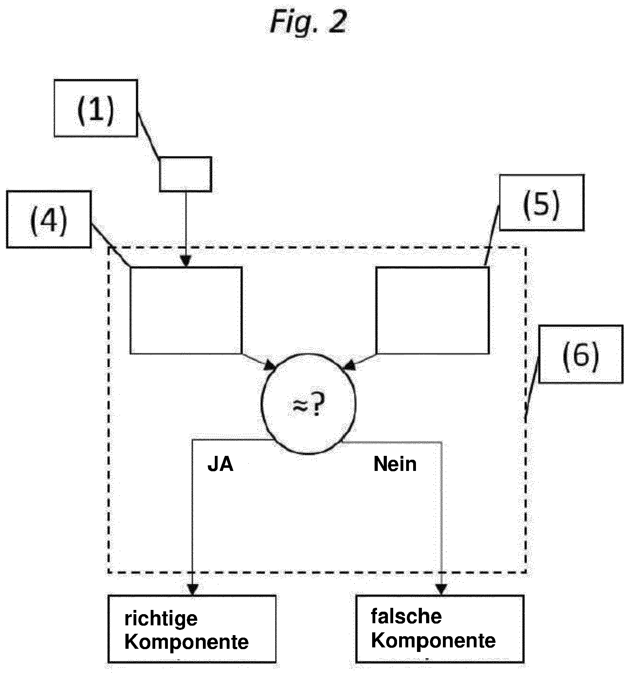

Der Detektor 1 ist an eine elektronische Auswerteeinheit 6 kabelgebunden oder kabellos angeschlossen, siehe Figur 2. In der Auswerteeinheit 6 parametrisiert die Analyseeinheit 4 den aufgezeichnete Speckle-Muster-Signaldatensatz SMS. Bei Anwendung der Bildverarbeitungslogarithmen auf den SMS erfolgt der Abgleich der parametrisierten Daten des Speckle-Musters, den sogenannten Parametern C,H,E,D, wie zuvor erläutert, mit bekannten Referenzdaten, den sogenannten Soll-Parametern, von zuvor als gut definierten Komponenten.

Der Speicher 5, auf dem die Referenzdaten bzw. Soll-Parameter vorliegen, kann innerhalb der Auswerteeinheit 6 integriert oder extern an die Auswerteeinheit 6 kabelgebunden oder kabellos angebunden sein.

Das Ergebnis der Auswerteeinheit 6 kann binär ("korrekt" oder "falsch") oder nichtbinär, d.h. als Wahrscheinlichkeitswert, ob das vorliegende Bauteil "korrekt" oder "falsch" ist, ausfallen. Dieses Ergebnis steht am Ausgang der Auswerteeinheit 6 zur Verfügung und kann beispielsweise durch die Anlagensteuerung genutzt werden, um eine etwaige Sortierung von Gut- und Schlechtkomponenten durchzuführen oder einen Alarm zu geben.

**Patentansprüche**

1. Verfahren zur berührungslosen und zerstörungsfreien Echtheits-Prüfung einer über eine herstellungsbedingte technische Oberflächentextur verfügenden Komponente mittels einer Laserlicht induzierten Specklemuster-Analyse, **dadurch gekennzeichnet, dass** wenigstens ein Bereich einer die Oberflächentextur enthaltenden Oberfläche der Komponente mit Laserlicht unter Ausbildung eines durch die Oberflächentextur beeinflussten, flächigen Specklemusters bestrahlt wird, das ortsaufgelöst detektiert und in einen 2-dimensionalen, digitalen Speckle-Muster-Signaldatensatz, kurz SMS, umgewandelt wird, der wenigstens einer Bildsignalverarbeitungsroutine unterzogen wird, bei der wenigstens ein dem SMS zuordenbarer Parameter ermittelt wird, der jeweils mit einem Soll-Parameter zur Ermittlung einer Abweichung verglichen wird, die einem Vergleichskriterium zugrunde gelegt wird, das der Echtheits-Prüfung dient, wobei die Bildsignalverarbeitungsroutine a) eine Grauwertübergangsmatrix und b) ein Histogramm und/oder c) eine Bildintensitätsstatistik zum SMS erstellt und

- im Fall a) als der Parameter ein

Kontrastwert $C = \sum_{m,n}(m - n)^2 G_{mn}$ und/oder eine
Homogenität

$$H = \sum_{m,n} \frac{1}{1+(m-n)^2} G_{mn}$$ ermittelt wird,
mit $m$, $n$: Zeilen- und Spaltennummer der Grauwertübergangsmatrix,
$G_{mn}$: Wert in der Grauwertübergangsmatrix,

- im Fall b) als der Parameter ein

Entropiewert

$$E = -\sum_{I=0}^{255}[rel(I) * log_2(rel(I))]$$ ermittelt wird,

mit $rel(I)$ normalisierte Histogrammzahlen eines bestimmten Grauwerts $I$, der als ganze Zahl im Bereich von 0 bis 255 definiert ist, und

- im Fall c) als der Parameter eine

Abweichung $D = \sqrt{\frac{\sum_x \sum_y (I_{xy}-M)^2}{N-1}}$ ermittelt wird,

mit $M = \frac{\sum_x \sum_y I_{xy}}{N}$ : durchschnittlicher Grauwert aller Signaldaten innerhalb des SMS,

$I_{xy}$: Grauwert von Signaldaten ($x$, $y$) im SMS und
$N$: Gesamtzahl der Signaldaten im SMS.

2. Verfahren nach Anspruch 1,
**dadurch gekennzeichnet, dass** die Komponente zumindest während der Laserlichtbeaufschlagung sowie der ortsaufgelösten Detektion des sich ausbildenden flächigen Specklemusters relativ zu einer das Laserlicht emittierenden Lichtquelle sowie einer das flächige Specklemuster detektierenden Einheit ruht oder quasistatisch ist.

3. Verfahren nach Anspruch 1 oder 2,

dadurch gekennzeichnet, dass jeweils der Soll-Parameter unter Verwendung wenigstens einer Referenz-Komponente ermittelt wird, deren herstellungsbedingte technische Oberflächentextur mittels eines authentifizierten Herstellungsverfahrens hergestellt ist.

4. Verfahren nach Anspruch 3,
dadurch gekennzeichnet, dass die Referenz-Komponente im Bereich einer die Oberflächentextur enthaltenden Oberfläche mit dem Laserlicht unter Ausbildung eines durch die Oberflächentextur beeinflussten, flächigen Specklemusters bestrahlt wird, das ortsaufgelöst detektiert und in einen 2-dimensionalen, digitalen Referenz-Speckle-Muster-Signaldatensatz, kurz RSMS, umgewandelt wird, der wenigstens einer Bildsignalverarbeitungsroutine unterzogen wird, bei der der wenigstens eine dem RSMS zuordenbare Soll-Parameter ermittelt wird, wobei die Bildsignalverarbeitungsroutine a) eine Grauwertübergangsmatrix und b) ein Histogramm und/oder c) eine Bildintensitätsstatistik zum RSMS erstellt und
im Fall a) als der Soll-Parameter ein

Soll-Kontrastwert $C = \Sigma_{m,n}(m - n)^2 G_{mn}$ und/oder eine
Soll-Homogenität

$$H = \sum_{m,n} \frac{1}{1+(m-n)^2} G_{mn}$$ ermittelt wird,

mit $m, n$ : Zeilen- und Spaltennummer der Grauwertübergangsmatrix,
$G_{mn}$ : Wert in der Grauwertübergangsmatrix,
- im Fall b) als der Soll-Parameter ein

Soll-Entropiewert
$$E = -\sum_{I=0}^{255}[rel(I) * log_2(rel(I))]$$
ermittelt wird,
mit $rel(I)$ normalisierte Histogrammzahlen eines bestimmten Grauwerts $I$, der als ganze Zahl im Bereich von 0 bis 255 definiert ist, und

- im Fall c) als der Soll-Parameter eine

$$D = \sqrt{\frac{\Sigma_x \Sigma_y (I_{xy} - M)^2}{N-1}}$$
Soll-Abweichung ermittelt wird,

mit $M = \frac{\Sigma_x \Sigma_y I_{xy}}{N}$ : durchschnittlicher Grauwert aller Signaldaten innerhalb des SMS,

$I_{xy}$ : Grauwert von Signaldaten $(x, y)$ im SMS und

$N$ : Gesamtzahl der Signaldaten im SMS.

5. Verfahren nach Anspruch 3 oder 4,
dadurch gekennzeichnet, dass sich zur Ermittlung des wenigstens einen Parameters zu einer zu prüfenden Komponente sowie des wenigstens einen Soll-Parameters unter Verwendung der Referenz-Komponente die Laserlichtbeaufschlagung der Komponenten sowie die ortsaufgelöste Detektion der sich jeweils ausbildenden flächigen Specklemuster nicht unterscheiden.

6. Verfahren nach einem der Ansprüche 1 bis 5,
dadurch gekennzeichnet, dass die herstellungsbedingte technische Oberflächentextur zumindest Teil einer keramischen, metallischen, polymeren, glasartigen, amorphen oder einer hybrid, aus den vorstehenden Oberflächenmaterialien zusammengesetzten Oberfläche ist.

## Claims

1. Method for contactless and non-destructive verification of the validity of a component that has a production-related technical surface texture using a laser light-induced speckle pattern analysis,
characterized in that at least one area of a surface of the component containing the surface texture is exposed to laser light, forming a planar speckle pattern that is influenced by the surface texture, which pattern is detected with spatial resolution and converted into a 2-dimensional, digital speckle pattern signal data record, SMS for short, which is subjected to at least one image signal processing routine, in which at least one parameter that is assignable to the SMS is determined, and is compared in each case with a target parameter to determine a deviation, which is used as a basis for a comparison criterion that is used for the validity verification, wherein the image signal processing routine creates a) a grey value transition matrix, b) a histogram, and/or c) an image intensity statistics for the SMS and

- in case a) a

contrast value $C = \Sigma_{m,n}(m - n)^2 G_{mn}$ and/or a homogeneity

$$H = \sum_{m,n} \frac{1}{1+(m-n)^2} G_{mn}$$ is determined as the parameter,
wherein $m, n$ : row and column number of the grey value

transition matrix,
$G_{mn}$ : value in the grey value transition matrix,

- in case b) an

entropy value

$$E = -\sum_{I=0}^{255}[rel(I) * log_2(rel(I))]$$ is

determined as the parameter,
wherein $rel(I)$ normalised histogram numbers of a given

grey value $I$, which is defined as an integer in
the range from 0 to 255, and

- in case c) a

$$D = \sqrt{\frac{\sum_x \sum_y (I_{xy}-M)^2}{N-1}}$$

deviation is determined as the parameter,

$$M = \frac{\sum_x \sum_y I_{xy}}{N}$$

wherein : average grey value of all signal

data within the SMS,
$I_{xy}$ : grey value of signal data (x, y) in the SMS and
$N$: total number of the signal data in the SMS.

2. Method according to Claim 1,
**characterized in that** the component is at rest or quasi-static relative to a light source emitting the laser light and a unit that detects the planar speckle pattern at least during the exposure to laser light and the spatially resolved detection of the planar speckle pattern as it is formed.

3. Method according to Claim 1 or 2,
**characterized in that** in each case the target parameter is determined using at least one reference component whose production-related technical surface texture is produced by means of an authenticated production process.

4. Method according to Claim 3,
**characterized in that** the reference component is exposed to the laser light in the area of a surface containing the surface texture, forming a planar speckle pattern that is influenced by the surface texture, which is detected with spatial resolution and converted into a 2-dimensional, digital reference speckle pattern signal data set, RSMS for short, which is subjected to at least one image signal processing routine, in which the at least one target parameter that is assignable to the RSMS is determined, wherein the image signal processing routine creates a) a grey value transition matrix, b) a histogram, and/or c) an image intensity statistics for the RSMS and
in case a) a

target contrast value $C = \sum_{m,n}(m-n)^2 G_{mn}$ and/or a
target homogeneity

$$H = \sum_{m,n} \frac{1}{1+(m-n)^2} G_{mn}$$ is determined as the target parameter,
wherein $m$, $n$: row and column number of the grey value transition matrix,
$G_{mn}$: value in the grey value transition matrix,
- in case b) a

target entropy value

$$E = -\sum_{I=0}^{255}[rel(I) * log_2(rel(I))]$$ is

determined as the target parameter,
wherein $rel(I)$ normalised histogram numbers of a given

grey value $I$, which is defined as an integer in
the range from 0 to 255, and

- in case c) a

$$D = \sqrt{\frac{\sum_x \sum_y (I_{xy}-M)^2}{N-1}}$$

target deviation
is determined as the
target parameter, wherein

$$M = \frac{\sum_x \sum_y I_{xy}}{N}$$ : average grey value of all signal

data within the SMS,
$I_{xy}$ : grey value of signal data (x, y) in the SMS and
N: total number of the signal data in the SMS.

5. Method according to Claim 3 or 4,
**characterized in that** in order to determine the at least one parameter for a component to be tested and the at least one target parameter using the reference component, the laser light impingement on the components and the spatially resolved detection of the planar speckle patterns forming in each case do not differ.

**6.** Method according to any one of Claims 1 to 5, **characterized in that** the production-related technical surface texture is at least part of a ceramic, metallic, polymeric, vitreous, amorphous or a hybrid surface composed of the preceding surface materials.

**Revendications**

**1.** Procédé d'essai sans contact et non destructif d'un composant disposant d'une texture de surface technique liée à la production au moyen d'une analyse de motif de mouchetures induite par la lumière laser, **caractérisé en ce qu'**au moins une zone d'une surface du composant contenant la texture de surface est irradiée avec une lumière laser pour former un motif de mouchetures plat influencé par la texture de surface, qui est détecté d'une manière spatialement résolue et converti en un ensemble de données de signal d'échantillon numérique bidimensionnel, SMS en abrégé, qui est soumis au moins à un programme de traitement du signal d'image, dans lequel au moins un paramètre pouvant être attribué au SMS est déterminé, qui est comparé respectivement avec un paramètre cible pour la détermination d'un écart, sur la base d'un critère de comparaison servant à vérifier l'authenticité, dans lequel la routine de traitement du signal d'image crée a) une matrice de transition de valeur de gris et b) un histogramme et/ou c) des statistiques d'intensité d'image pour le SMS et

- dans le cas a) comme paramètre une valeur de contraste $C = \Sigma_{m,n}(m - n)^2 G_{mn}$ et/ou une homogénéité $H = \sum_{m,n} \frac{1}{1+(m-n)^2} G_{mn}$ est déterminée avec

m, n : numéro de ligne et de colonne de la matrice de transition des valeurs de gris,
Gmn : valeur dans la matrice de transition des valeurs de gris,

- dans le cas b) comme paramètre une valeur d'entropie

$$E = -\sum_{I=0}^{255}[rel(I) * log_2(rel(I))]$$

est déterminée, avec rel(I) numéros d'histogramme normalisés d'une certaine valeur de gris *I*, qui est définie comme un entier compris entre 0 et 255, et

- dans le cas c) comme paramètre un écart

$$D = \sqrt{\frac{\Sigma_x \Sigma_y (I_{xy} - M)^2}{N-1}}$$ est déterminé avec

$$M = \frac{\Sigma_x \Sigma_y I_{xy}}{N}$$ : valeur de gris moyenne de toutes les données de signal dans le SMS,

$I_{x,y}$ : valeur de gris des données de signal (x, y) dans le SMS et
N : nombre total de données de signal dans le SMS.

**2.** Procédé selon la revendication 1, **caractérisé en ce que** le composant au moins pendant l'exposition à la lumière laser et la détection spatialement résolue du motif de mouchetures plates qui se forme est stationnaire ou quasi-statique par rapport à une source de lumière émettant la lumière laser et à une unité détectant le motif de mouchetures plates.

**3.** Procédé selon la revendication 1 ou 2, **caractérisé en ce que** le paramètre cible est déterminé à l'aide d'au moins un composant de référence dont l'état de surface technique lié à la production est produit au moyen d'un processus de fabrication authentifié.

**4.** Procédé selon la revendication 3, **caractérisé en ce que** le composant de référence est irradié dans la zone de la surface contenant la texture de surface avec la lumière laser pour former un motif de mouchetures plat influencé par la texture de surface, qui est détecté de manière spatialement résolue et converti en un ensemble de données de signal de motif de mouchetures de référence numérique bidimensionnel, RSMS en abrégé, qui est soumis à au moins une routine de traitement de signal d'image qui détermine le ou les paramètres cibles qui peuvent être attribués au RSMS, dans lequel la routine de traitement du signal d'image crée a) une matrice de transition de valeur de gris et b) un histogramme et/ou c) des statistiques d'intensité d'image pour le RSMS et

- dans le cas a) comme paramètre cible une valeur de contraste cible $C = \Sigma_{m,n}(m-n)^2 G_{mn}$ et/ou une homogénéité cible $H = \sum_{m,n} \frac{1}{1+(m-n)^2} G_{mn}$ est déterminée avec m, n : numéro de ligne et de colonne de la matrice de transition de valeur de gris ,
$G_{mn}$ : valeur dans la matrice de transition des valeurs de gris,
- dans le cas b) comme paramètre cible la valeur d'entropie cible

$$E = -\sum_{I=0}^{255}[rel(I) * log_2(rel(I))]$$

est déterminée,

avec rel($I$) numéros d'histogramme normalisés d'une valeur de gris spécifique $I$, qui est définie comme un nombre entier compris entre 0 et 255, et

- dans le cas c) comme paramètre cible un écart

$$D = \sqrt{\frac{\sum_x \sum_y (I_{xy} - M)^2}{N-1}}$$

cible            est déterminé

avec $M = \frac{\sum_x \sum_y I_{xy}}{N}$ : valeur de gris moyenne de toutes les données de signal dans le SMS,

$I_{xy}$ : valeur de gris des données du signal (x, y) dans le SMS et

N : nombre total de données du signal dans le SMS.

5. Procédé selon la revendication 3 ou 4, **caractérisé en ce que** pour déterminer au moins un paramètre d'un composant à tester et au moins un paramètre cible utilisant le composant de référence, l'exposition à la lumière laser des composants et la détection spatialement résolue des motifs de mouchetures plates qui se forment dans chaque cas ne diffèrent pas.

6. Procédé selon une des revendications 1 à 5, **caractérisé en ce que** les aspects techniques de la texture de surface liée à la production est au moins une partie d'une surface céramique, métallique, polymère, vitreuse, amorphe ou hybride composée des matériaux de surface ci-dessus.

Fig. 1

(1)

(1a)

(2)

(3)

Fig. 2

(1)

(4)

(5)

(6)

≈?

JA

Nein

richtige
Komponente

falsche
Komponente

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2411954 A

**In der Beschreibung aufgeführte Nicht-Patentliteratur**

- **GOERTZEL KM.** Integrated circuit security threats and hardware assurance countermeasures. *Cross-Talk,* 2013, vol. 26 (6), 33-38
- **PRADANA ADITYA BUDI.** *A Portable Surface Roughness Measurement System Using Laser Speckle Imaging Based on GLCM*

- **HARALICK RM ; SHANMUGAM K ; DINSTEIN I.** Textural Features for Image Classification. *IEEE Trans. Syst., Man, Cybern,* 1973